(19) Europäisches Patentamt

European Patent Office

Office européen des brevets

(11) **EP 1 630 736 A1**

(12) **EUROPEAN PATENT APPLICATION**

(43) Date of publication:
**01.03.2006 Bulletin 2006/09**

(51) Int Cl.:
***G06Q 10/00*** (2006.01)

(21) Application number: **05018210.4**

(22) Date of filing: **22.08.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Tabata, Izumi**<br>  **Tokyo 106-0047 (JP)**<br>• **Furuichi, Katsuhisa**<br>  **Tokyo 106-0047 (JP)** |
| (30) Priority: **23.08.2004 JP 2004241872** | (74) Representative: **Glawe, Delfs, Moll**<br>**Patentanwälte**<br>**Postfach 26 01 62**<br>**80058 München (DE)** |
| (71) Applicant: **DeeCorp Limited**<br>**Minatu-Ku, Tokyo 106-0047 (JP)** | |

(54) **Reverse auction control method, computer program product, and server**

(57)     A control method of reverse auction that is implemented by a server (1) connected to a plurality of supplier terminals (3) through a communication network (4). The control method first receives bids from the plurality of supplier terminals (3) through the communication network (4) (S801). Then, the server (1) calculates a bid price ratio for relatively comparing bid prices of the received bids (S803). Further, the server (1) determines the distribution of a total procurement amount of a reverse auction target item based on the bid price ratio (S804).

①PROCUREMENT INFORMATION
②BID
③REVERSE AUCTION PROGRESS INFORMATION
④REVERSE AUCTION RESULT

Fig. 1

**Description**

BACKGROUND OF THE INVENTION

1. Field of the Invention

The present invention relates to control of reverse auction on a communication network and, particularly, to a control method of reverse auction in which procurement shares distributed to suppliers vary according to a bid price difference or the like among the suppliers, a computer program product which causes a computer to execute the method, and a server.

2. Description of Related Art

Electronic purchase services that procure a product or service over the internet becomes common. Recently, B-to-B service that is intended for business-to-business transaction, not only B-to-C service that targets general consumers, is on the increase. One form of the electronic purchase service is a reverse auction service.
The reverse auction service starts upon buyer's presentation of desired purchase terms such as specifications of desired product or service, price, quantity, delivery date, and delivery place. In this auction, suppliers who can satisfy the buyer's terms of purchase submit their bids. The supplier who has submitted the most favorable bit price, which is generally the lowest bid price, becomes a successful bidder. This is called "reverse auction" because roles of supplier and buyer are opposite from bid-up auction (forward auction) in which buyers submit bids in order to obtain an item presented by a supplier. The reverse auction that procures a product or service based on the buyer's purchase terms is suitable for business-to-business transaction since the terms of purchase such as desired specifications, delivery date, and delivery method are different from buyer to buyer in many cases.
A basic form of the reverse auction service is one-on-one reverse auction that selects a single supplier who has submitted the most favorable bid from those who satisfy buyer's desired purchase terms. However, in often cases, a company selects a plurality of suppliers to procure important products or the like for the purpose of avoiding risk of depending on a single supplier. To respond to such a case, another form of reverse auction selects a plurality of suppliers by dividing a total procurement amount of a product which a buyer intends to purchase and distributing parts of the total procurement amount to a plurality of suppliers.
Conventional methods of the reverse auction to select a plurality of suppliers include (1) holding reverse auction to select a predetermined number of suppliers and determining the distribution of procurement shares when making a contract after the suppliers are selected; (2) fixedly setting the number of suppliers to be selected and an allocation ratio of the procurement shares to the selected supplies depending on the ranking of bid prices and fixedly distributing the procurement shares according to the allocation ratio; and (3) ranking the suppliers based on bid prices and securing the desired quantity from the total procurement for the suppliers in a ranking order from the top. These methods are disclosed in International Patent Publication No. WO 1/053929 and Japanese Unexamined Patent Publication No. 2002-109280, for example.
However, in the reverse auction method that enables selection of a plurality of suppliers, participating suppliers can lose their motive for lowering a bid price as the ranks of the suppliers become determinate in the course of the reverse auction, which hinders a final contact price from being sufficiently low.
For example, the reverse auction process of the method (2) places participating supplies in ascending order of bid prices, determines the top two suppliers to be successful bidders and allocates a predetermined procurement shares according to their ranks, which is 70% of the total procurement to the first-ranked supplier and 30% to the second-ranked supplier, for example. In this case, however, when a difference in bid price between the second-ranked supplier and the third or lower ranked suppliers is too large to compete or when the third or lower ranked suppliers give up competing with the second-ranked supplier, the second-ranked supplier does not need to make an effort to further lower the bid price in relation to the third or lower ranked suppliers. Similarly, when the bid price of the second-ranked supplier is far higher than that of the first-ranked supplier, the allocation ratio of 70% is determinate for the first-ranked supplier and thus there is no need to make an effort to further lower the bid price.
In the method (3) also, when the bid price of the second-ranked supplier is far higher than that of the first-ranked supplier, it is determinate that the first-ranked supplier can obtain the distribution of a procurement share by priority and therefore there is no more need to make an effort to further lower the bid price.
As described in the foregoing, the method of allocating procurement shares only according to the ranking has a problem that incentive for the suppliers to lower the bid price disappears when the ranking of the suppliers becomes determinate, and therefore the effect of lowering the price by competition among suppliers does not work well.

SUMMARY OF THE INVENTION

The present invention has been made to solve the above problems and an object of the present invention is thus to provide a control method of reverse auction that enhances the effect of lowering a contrast price by encouraging competition among suppliers, a computer program product for causing a computer to execute the method, and a server.

According to an aspect of the present invention, there is provided a control method of reverse auction by a server connected to a plurality of supplier terminals through a communication network, which includes receiving bids from the plurality of supplier terminals through the communication network, generating comparison information for relatively comparing evaluation parameters of the bids, and determining distribution of a total procurement amount of a reverse auction target item based on the comparison information. It is thereby possible to change procurement shares allocated to the suppliers in accordance with the comparison information such as a bid price ratio. This encourages competition among suppliers and enhances the effect of lowering a contrast price.

The step of determining the distribution of a total procurement amount preferably determines the distribution of the total procurement amount based on an allocation rule that associates the comparison information and the distribution.

The step of determining the distribution of a total procurement amount preferably determines a distribution quantity or a distribution ratio of the total procurement amount.

The step of generating the comparison information preferably ranks the bids transmitted from the plurality of supplier terminals and generates the comparison information on a predetermined number of bids ranked from a top.

Further, the control method preferably includes a step of transmitting reverse auction progress information containing the determined distribution to the plurality of supplier terminals. It is thereby possible to encourage a supplier who is informed of the progress information through the supplier terminal to submit a new bid, thereby further promoting competition among suppliers.

According to another aspect of the present invention, there is provided a computer program product for causing a computer to execute control of reverse auction, the computer program product including a computer readable medium that stores a program code, the program code including a first program code generating comparison information for relatively comparing evaluation parameters of bids which transmitted from a plurality of supplier terminals to the computer, and a second program code determining distribution of a total procurement amount of a reverse auction target item based on the comparison information. If the computer executes this process, it is possible to change procurement shares allocated to the suppliers in accordance with the comparison information such as a bid price ratio. This encourages competition among suppliers and enhances the effect of lowering a contrast price.

The second program code preferably determines the distribution of the total procurement amount based on an allocation rule that associates the comparison information and the distribution.

The second program code preferably determines a distribution quantity or a distribution ratio of the total procurement amount.

The first program code preferably ranks the bids transmitted from the plurality of supplier terminals and generates the comparison information on a predetermined number of bids ranked from a top.

Further, the computer program product preferably further includes a program code transmitting reverse auction progress information containing the determined distribution to the plurality of supplier terminals. It is thereby possible to encourage a supplier who is informed of the progress information through the supplier terminal to submit a new bid, thereby further promoting competition among suppliers.

According to yet another aspect of the present invention, there is provided a server connectable to a plurality of supplier terminals through a communication network and implementing control of reverse auction, including a unit of receiving bids from the plurality of supplier terminals through the communication network, a unit of generating comparison information for relatively comparing evaluation parameters of the bids, and a unit of determining distribution of a total procurement amount of a reverse auction target item based on the comparison information. In this configuration, it is possible to change procurement shares allocated to the suppliers in accordance with the comparison information such as a bid price ratio. This encourages competition among suppliers and enhances the effect of lowering a contrast price.

The unit of determining the distribution preferably determines the distribution of the total procurement amount based on an allocation rule that associates the comparison information and the distribution.

The unit of determining the distribution preferably determines a distribution quantity or a distribution ratio of the total procurement amount.

The unit of generating the comparison information preferably ranks the bids transmitted from the plurality of supplier terminals and generates the comparison information on a predetermined number of bids ranked from a top.

Further, the server preferably includes a unit of transmitting reverse auction progress information containing the determined distribution to the plurality of supplier terminals. It is thereby possible to encourage a supplier who is informed of the progress information through the supplier terminal to submit a new bid, thereby further promoting competition among suppliers.

The present invention can provide a control method of reverse auction that enhances the effect of lowering a contrast price by encouraging competition among suppliers, a computer program product for causing a computer to execute the method, and a server.

The above and other objects, features and advantages of the present invention will become more fully understood from the detailed description given hereinbelow and the accompanying drawings which are given by way of illustration only, and thus are not to be considered as limiting the present invention.

BRIEF DESCRIPTION OF THE DRAWINGS

Fig. 1 is an entire block diagram of a reverse auction system of a first embodiment of the invention;
Fig. 2 is a block diagram of a server;
Fig. 3 is an example of a buyer information table;
Fig. 4 is an example of a supplier information table;
Fig. 5 is an example of a procurement case table;
Fig. 6 is a procurement allocation table;
Fig. 7 is a process flow diagram of the reverse auction system of the first embodiment of the invention;
Fig. 8 is a process flow diagram of reverse auction according to the first embodiment of the invention;
Figs. 9A and 9B are views showing examples of a supplier ranking list;
Fig. 10 is a view showing an example of a display screen of a buyer terminal;
Figs. 11A and 11B are examples of a display screen of a supplier terminal;
Fig. 12 is a process flow diagram of reverse auction according to a second embodiment of the invention; and
Fig. 13 is a process flow diagram of reverse auction according to the second embodiment of the invention.

DESCRIPTION OF THE PREFERRED EMBODIMENTS

First Embodiment

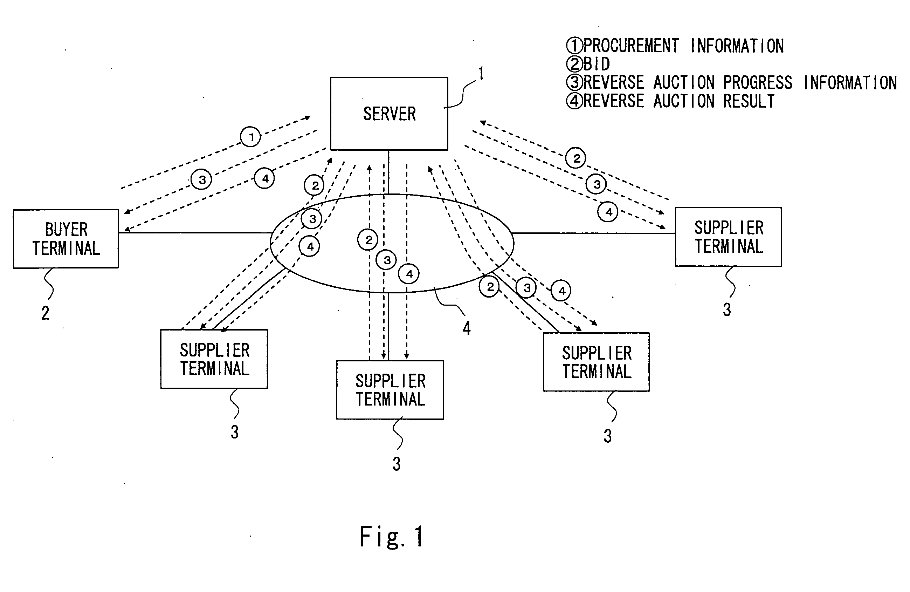

Fig. 1 is the entire block diagram of a reverse auction system of a first embodiment of the invention. The system has a server 1, one or more buyer terminal 2, and one or more supplier terminal 3, which are connected over the network 4.

The server 1 acquires and controls procurement information containing a desired product and procurement amount which is transmitted from the buyer terminal 2 and bidding information which is transmitted from the supplier terminal 3, and conducts reverse auction. The buyer terminal 2 is used by a buyer who is a user of the reverse auction service. The supplier terminal 3 is used by a supplier who is also a user of the reverse auction service. The buyer is a purchaser who desires to procure a product or service through the use of the reverse auction service. The supplier is a seller who desires to offer a product or service to the buyer.

An overview of the operation of the reverse auction system of this embodiment is described hereinafter with reference to Fig. 1. Firstly, the buyer terminal 2 transmits procurement information about a reverse auction target to the server 1. The reverse auction target is an item to be procured in the reverse auction, such as a product or service which the buyer desires to obtain. The procurement information includes the name of a reverse auction target item, a total procurement amount, a reverse auction starting price, the number of suppliers to be selected, and so on. The total procurement amount is a total amount of an item which the buyer desires to procure. If an item to be procured is a product, it is a procurement quantity. If, on the other hand, an item to be procured is service, it is a value to specify the scale of the service, such as the number of hours in temporary personnel service, the number of words in translation service, the area of a floor to be cleaned in cleaning service, and so on. The reverse auction starting price is an initial price when starting the reverse auction. The number of suppliers to be selected specifies the upper limit of the number of suppliers who are to be selected as those who offer an item to be procured.

Then, the server 1 implements the reverse auction based on the procurement information transmitted from the buyer terminal 2. During the reverse auction, each supplier terminal 3 transmits a bid input by a supplier to the server 1, and the server 1 compares the bids transmitted from the supplier terminals 3 and ranks the suppliers. The bid is data that at least contains an evaluation parameter which is required for ranking the bids. Though the evaluation parameter is typically a bid price for the total procurement amount, it may be other parameters such as a price per unit quantity of an item to be procured, a price reduction rate or a price reduction range with respect to a reference price.

After that the server 1 generates comparison information based on the bids from the suppliers. The comparison information is a parameter used for comparing relative merits of the evaluation parameters contained in the bids among suppliers. For example, if the evaluation parameter is a bid price, it is a relative amount between two or more bid prices such as a bid price difference or a bid price ratio.

Then, the server 1 determines the distribution when dividing the total procurement amount desired by the buyer and allocating procurement shares to a plurality of suppliers. The distribution determined here is an allocation quantity divided from the total procurement amount, an allocation ratio indicating the percentage distributed out of the total procurement amount, or the like. It may be another value as long as it indicates how to allocate the total procurement amount to one or more suppliers.

Further, the server 1 transmits the progress of the reverse auction and the information to display a final result of the reverse auction to the buyer terminal 2 and the supplier terminal 3. The buyer terminal 2 and the supplier terminal 3 display the information on display means such as a display.

By the above process, the reverse auction system of this embodiment implements the reverse auction in which the distribution of procurement shares to suppliers vary according to a difference in bid price or the like of suppliers. The devices constituting the reverse auction system of this embodiment, program, and the flow of the reverse auction of this embodiment are described hereinafter. The following description describes a case where an item to be procured is a product, an evaluation parameter during bidding is a bid price, comparison information is a difference value in bid price, and distribution to suppliers is specified by an allocation ratio.

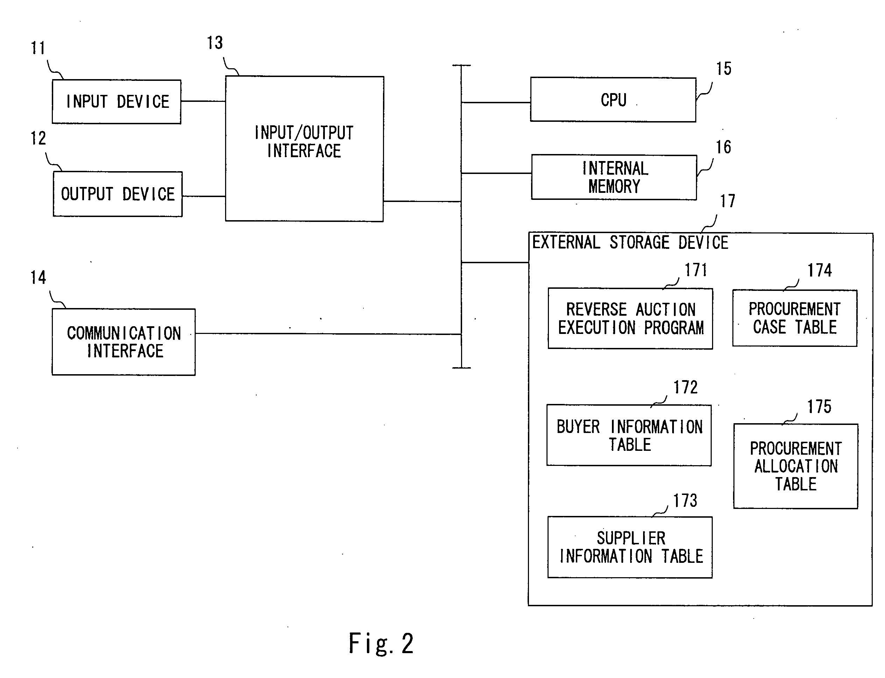

Fig. 2 shows the hardware configuration of the server 1. The server 1 may be composed of a typical computer system. For example, the server 1 includes an input device 11 such as a keyboard and a mouse, an output device 12 such as a monitor and a printer, an input/output interface 13 for controlling their input and output, and a communication interface 14 for transmitting and receiving data through a network such as LAN, telephone network, packet exchange network. The server 1 further includes a CPU 15 for executing arithmetic processing, an internal memory 16, and an external storage device 17. The external storage device 17 is a hard disk device, for example, which is placed in the same computer together with other components. Instead, it may be a physically separated database or a combination of a plurality of hard disks or databases.

The CPU 15 is a central control unit that executes each processing in the server 1 according to control program. The control program is a program for causing the CPU 15 to execute the processing on the server 1, and it is stored in the internal memory 16 or the external storage device 17. The program may be acquired from remote memory through the communication network.

The external storage device 17 stores reverse auction execution program 171, buyer information table 172, supplier information table 173, procurement case table 174, and procurement allocation table 175.

The reverse auction execution program 171 causes the computer system to implement the reverse auction control of this invention. It is loaded to the internal memory 16 and executed on the CPU 15. The CPU 15 operates according to the reverse auction execution program 171, thereby allowing the computer system to operate as the server 1 of this embodiment.

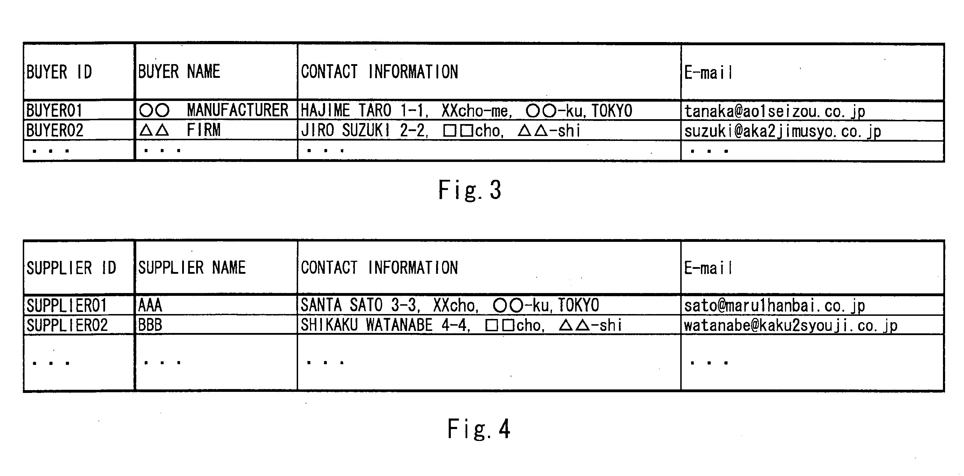

The buyer information table 172 stores information about a buyer who is a user of the reverse auction service. Fig. 3 shows an example of the buyer information table 172. As shown in Fig. 3, the buyer information table 172 stores information including each buyer's name, buyer ID as a buyer identifier, and buyer contact information. The buyer information is, for example, input by a reverse auction administrator through the input device 11 and stored into the internal memory 16 or the external storage device 17 through the input/output interface 13. The buyer information may be acquired from remote memory through the communication interface 14 or it may be the data input by a buyer in the buyer terminal 2 and received through the communication interface 14.

The supplier information table 173 stores information about a supplier who is a user of the reverse auction service. Fig. 4 shows an example of the supplier information table 173. As shown in Fig. 4, the supplier information table 173 stores information including each supplier's name, supplier ID as a supplier identifier, and supplier contact information. The supplier information is, for example, input by a reverse auction administrator through the input device 11 and stored into the internal memory 16 or the external storage device 17 through the input/output interface 13. The supplier information may be acquired from remote memory through the communication interface 14 or it may be the data input by a supplier in the supplier terminal 3 and received through the communication interface 14.

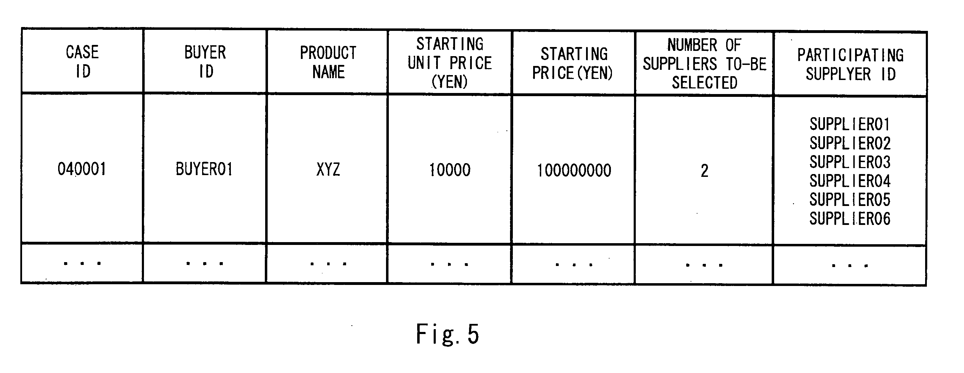

The procurement case table 174 stores information contained in the procurement information transmitted from the buyer terminal 2 in association with the buyer ID and a case ID as an identifier of a reverse auction case. Fig. 5 shows an example of the procurement case table 174. As shown in Fig. 5, it stores information containing a buyer ID of a buyer who intends to procure an item, the name of a desired product, a total procurement amount, and a reverse auction starting price in association with a case ID assigned to each procurement case. Since the procurement information is determined mainly by the buyer's intention as reverse auction starting terms, it is preferably supplied from the buyer terminal 2. However, it may be input by a reverse auction administrator through the input device 11 and stored into the internal memory 16 or the external storage device 17 through the input/output interface 13. The point is that the procurement information is stored prior to the start of reverse auction in such a way that the server 1 can refer to it.

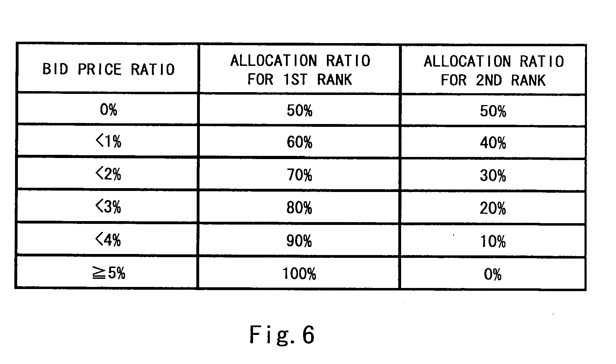

The procurement allocation table 175 defines the allocation ratio of procurement shares depending on a difference in bid price. Fig. 6 shows an example of the procurement allocation table 175 when the number of suppliers to be selected is two. "Bid price ratio" indicates a difference in bid price between the supplier whose bid price is ranked in the first place, which is the lowest, and the supplier in the second place as a ratio with respect to the bid price of the first-ranked supplier. "Allocation ratio for 1st rank" indicates an allocation ratio of a procurement share to the first-ranked supplier. "Allocation ratio for 2nd rank" indicates an allocation ratio of a procurement share to the second-ranked supplier. For example, if a bid price ratio between the first-ranked supplier and the second-ranked supplier is 1% or higher and lower than 2%, 70% of the total procurement amount is allocated to the first-ranked supplier and 30% is allocated to the second-ranked supplier. In the example of Fig. 6, if a difference in bid price is +5% or higher, it selects the first-ranked supplier only to procure the whole amount from a single supplier. However, if a buyer prefers selecting two or more suppliers without any exception in order to avoid a risk of depending on a single supplier, the procurement allocation table 175 may be set so that an allocation ratio for the second or lower ranked supplier is always a finite value.

Since a buyer usually desires to determine an allocation ratio rule applied to the procurement allocation table 175, the procurement allocation table 175 is preferably generated based on the information supplied from the buyer terminal 2 prior to the reverse auction. However, it maybe input by a reverse auction administrator to the server 1 through the input device 11. The point is that the procurement allocation table 175 is stored prior to the start of reverse auction in such a way that the server 1 can refer to it.

The buyer terminal 2 is a personal computer (PC), for example, which includes CPU, ROM, RAM, hard disk, display, keyboard, mouse, and so on. The buyer terminal 2 exchanges data with the server 1 and displays the progress and final result of reverse auction by executing Web browser program stored in the hard disk, for example, using TCP/IP, HTTP protocol.

The supplier terminal 3 is also a PC, for example, which includes CPU, ROM, RAM, hard disk, display, keyboard, mouse, and so on. The supplier terminal 3 exchanges data with the server 1 and displays the progress and final result of reverse auction by executing Web browser program stored in the hard disk, for example.

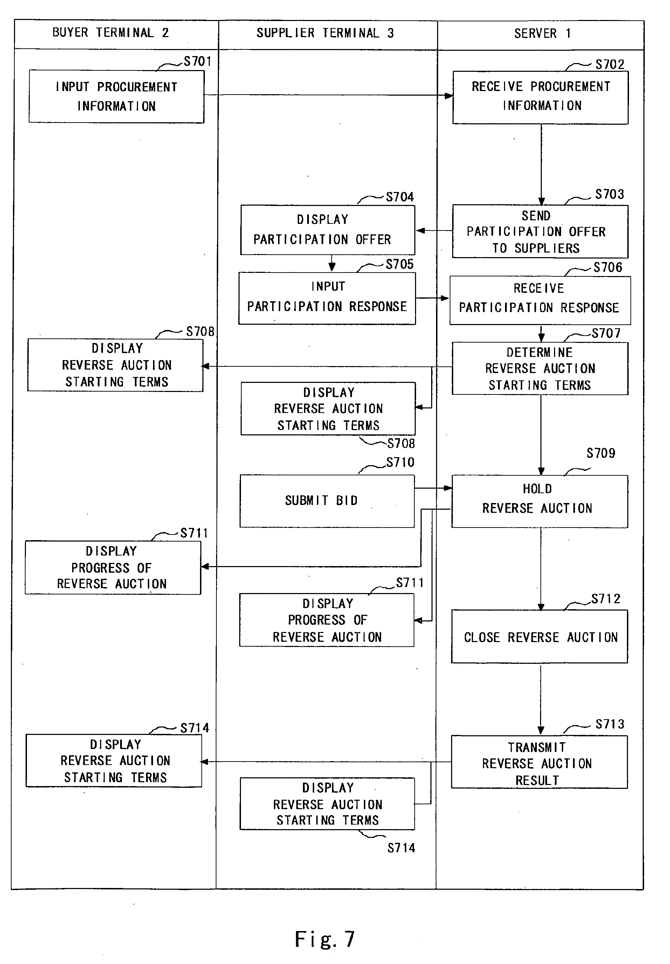

The network 4 is a communication network such as internet, public network, exclusive line, and mobile communication network. The process flow of the reverse auction of this embodiment is described hereafter with reference to Fig. 7. The operation of the server 1 described below is executed by the CPU 15 which operates in collaboration with other hardware resources according to the reverse auction execution program 171.

First, the buyer terminal 2 accepts input of procurement information by a buyer and transmits the procurement information to the server 1 (S701). Then, the server 1 receives the procurement information from the buyer terminal 2 through the communication interface 13 and stores it into the procurement case table 174 in the external storage device 17 (S702). Then, the server 1 transmits a notice of invitation to participate in the reverse auction to the supplier terminal 3. At this time, the server 1 also transmits to the supplier terminal 3 the information about the reverse auction case such as a procurement target item, a total procurement amount, a reverse auction starting price, and the number of suppliers to be selected, which is stored in the procurement case table 174. It may further transmit to the supplier terminal 3 the allocation ratio rule applied to the procurement allocation table 175 together with the invitation notice. This is because disclosing the allocation rule beforehand would encourage the positive participation in the reverse auction for a higher allocation ratio.

Instead, the supplier who has received the invitation notice may access the server 1 through the supplier terminal 3 to browse the information about the reverse auction case. The supplier terminal 3 displays the received invitation notice in a display or the like (S704). The supplier terminal 3 then accepts input of a participation response by a supplier who desires to participate in the reverse auction and transmits the response to the server 1 (S705). The server 1 receives the participation response from the supplier terminal 3 (S706). It is preferred that the server 1 stores the supplier ID of the supplier who has returned the participation response into the procurement case table 174 in association with the case ID.

Then, the server 1 determines the starting terms of the reverse auction based on the information on the participating buyer and suppliers obtained in the preceding steps, and transmits the starting terms to the buyer terminal 2 of the participating buyer and the supplier terminals 3 of the participating suppliers for confirmation (S707). The buyer terminal 2 and the supplier terminals 3 display the received starting terms for the participating buyer or suppliers (S708).

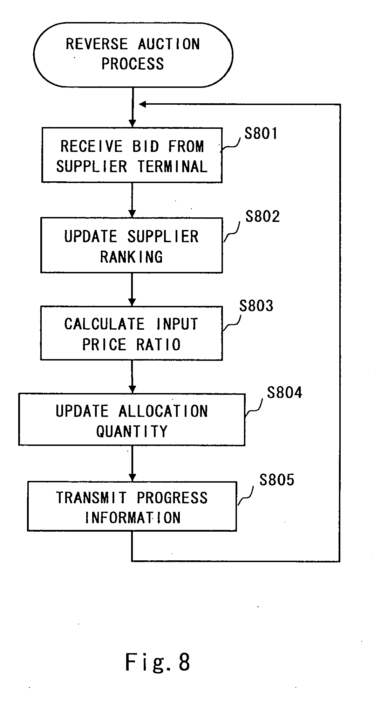

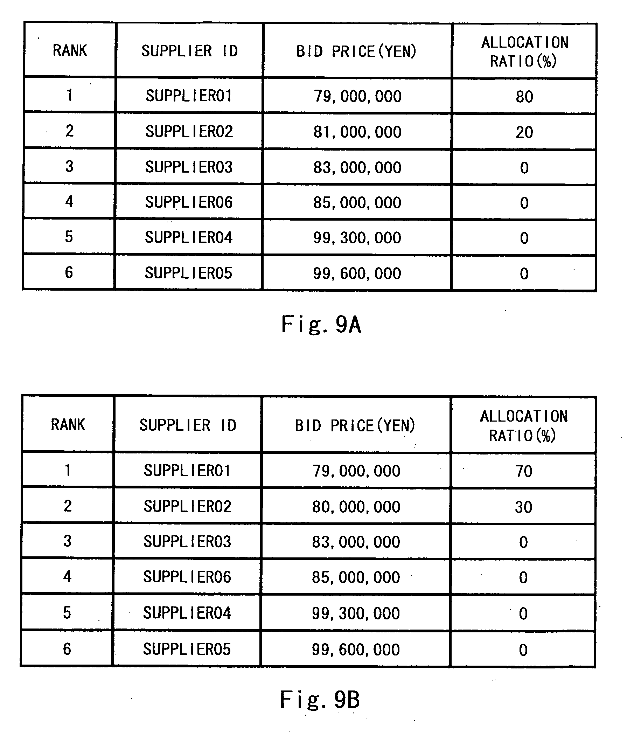

After that, the server 1 holds the reverse auction (S709). The supplier terminal 3 accepts a bid from a supplier and transmits the information to the server 1 (S710). The detail of the reverse auction process executed in the server 1 is described hereinafter with reference to Figs. 8 and 9.

In the reverse auction process, the server 1 first receives bid data from the supplier terminal 3 (S801). The bid data at least contains a bid price. The received bid data is stored in the internal memory 16 and used in the processing after the step S802 described later. The bid data may be stored in the external storage device 17 in order to back up the data or retain the bid history.

The server 1 reads out the bid price stored in the internal memory 16, compares it with the bid prices submitted by other suppliers and updates a supplier ranking list (S802). The supplier ranking list ranks the suppliers who participate in the reverse auction in ascending order of bid prices, with which the supplier ID for identifying the supplier and the bid price submitted by this supplier are associated and stored. Figs. 9A and 9B show examples of the supplier ranking list. The supplier ranking list is retained in the internal memory 16, for example, and used for controlling the progress of the reverse auction.

Then, the server 1 updates the allocation ratio of procurement shares to the participating suppliers with reference to the procurement allocation table 175 (S802 and S803). A specific example of the update process of the allocation ratio is described with reference to the procurement allocation table 175 of Fig. 6 and the supplier ranking lists of Figs. 9A and 9B. It is assumed here that the number of suppliers to be selected is two and procurement shares are allocated according to the procurement allocation table shown in Fig. 6. If the six suppliers, supplier 01 to supplier 06, submit bids at some points of the reverse auction, and the supplier ranking list shown in Fig. 9A is created, the current candidates for successful bidders are supplier 01 ranked in the first place and the supplier 02 ranked in the second place.

When calculating and updating the allocation ratio to the successful bidder candidates, a bid price ratio, which is a parameter to evaluate a difference in bid price between the first-ranked and second-ranked suppliers, is calculated firstly (S803). The calculated bid price is tentatively stored in the internal memory 16. In the example of Fig. 9A, since the bid price of the first-ranked supplier is 79 million yen and the bid price of the second-ranked supplier is 81 million yen, a difference in bid price is 2 million yen. The bid price ratio with respect to the first-tanked bid price (79 million yen) is thus 2.53%. The next step determines the allocation ratio of the procurement shares corresponding to the bid price ratio calculated in the step S803 with reference to the procurement allocation table 175 (S804). The procurement allocation table 175 of Fig. 6 shows that, when the bid price ratio is 2.53%, the procurement allocation ratio for the first-ranked supplier is 80% and that for the second-ranked supplier is 20%.

The allocation ratio which is calculated and updated in this step is still on the progress, and the allocation ratio can vary as the bid price difference varies due to more bids submitted by the suppliers. For example, if supplier 02 submits a new bid price of 80 million yen, the bid price ratio with respect to the bid price of the first-ranked supplier (supplier 01) becomes 1.27%. The allocation ratio thereby changes as shown in Fig. 9B so that the procurement allocation ratio for the first-ranked supplier is 70% and that for the second-ranked supplier is 30%. Since the allocation ratio of the procurement shares varies even if the ranking of the suppliers does not change, it is important for the first-ranked supplier not merely to win the first place but also to win the place with as much difference as possible from the second-ranked supplier. Hence, the first-ranked supplier is expected to submit a lower bid price even after the ranking becomes determinate.

Though the parameter for evaluating a bid price difference is the bid price ratio in the above example, it may be an absolute value of a price difference. Further, the bid evaluation parameter for ranking the suppliers is not limited to the bid price. In this invention, it is important to change the distribution of procurement shares according not only to the ranking of suppliers but also to a parameter, such as an allocation ratio, for comparing relative merits of the evaluation parameter, such as a bid price, used for ranking the suppliers. Therefore, selection of the evaluation parameter for ranking the suppliers and the parameter for relatively comparing the evaluation parameters may be made flexibly depending on the kind of a product or service to be procured.

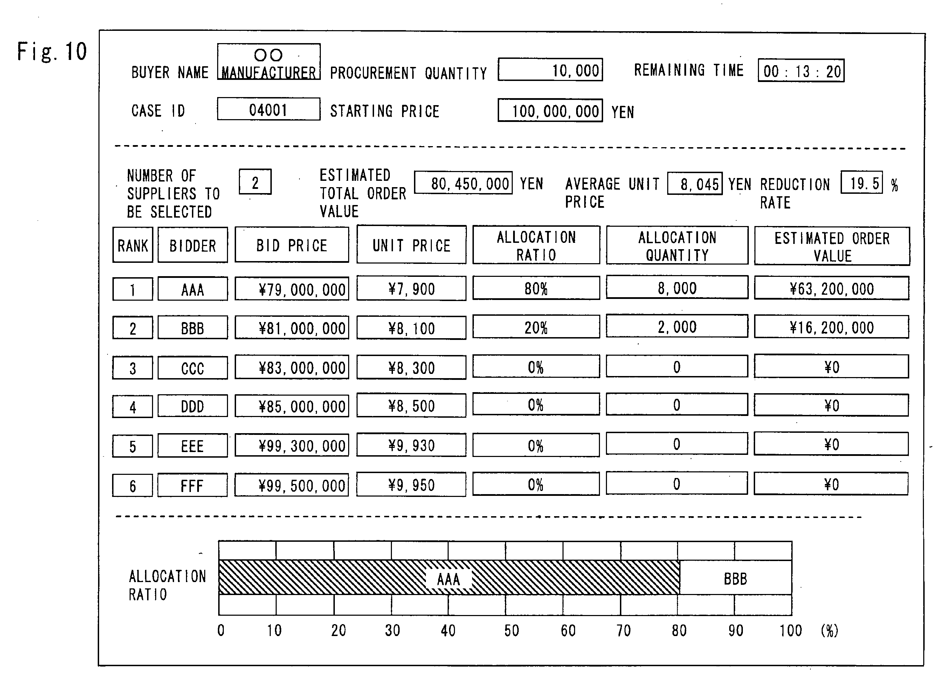

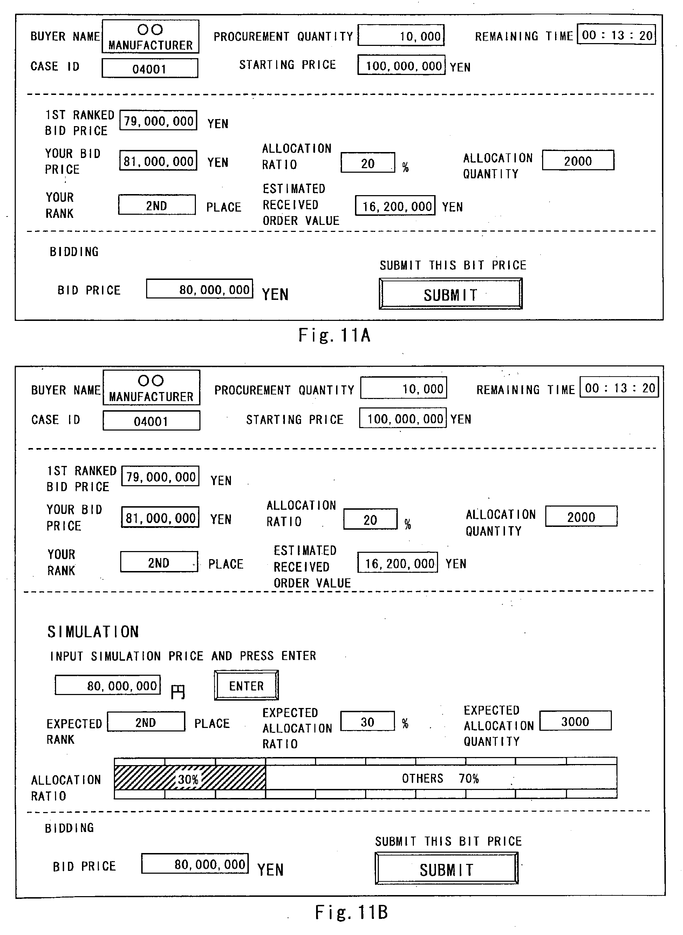

Finally, the server 1 transmits progress information of the reverse auction to the buyer terminal 2 and the supplier terminal 3 (S805). Figs. 10, 11A and 11B show examples of display screens of the buyer terminal 2 and the supplier terminal 3, which displays data based on the transmitted progress information. Fig. 10 shows an example of a display screen of the progress information to a buyer. It informs the buyer of the participating suppliers' bid prices, ranking, allocation ratio of procurement shares, allocation quantity and so on. On the other hand, Fig. 11A shows an example of a display screen of the progress information to a supplier. It informs the supplier of the supplier's current rank and allocation ratio. It may also display the bid price of the first-ranked supplier. Since each participating supplier is interested in a difference in bid price between the first-ranked supplier and themselves, the bid price of the first-ranked supplier can serve as a guideline for submitting a new bid. Though the display screen of Fig. 11A displays both the supplier's ranking and allocation ratio, it may display the allocation ratio only as a minimum configuration. The display screen of Fig. 11A is configured to accept bid submission described in the step S710 in the same screen as the progress information display.

Further, the display screen of progress information to a supplier may include an item for simulation that enables estimation of an allocation ratio that can be obtained if the supplier submits a lower bid price as shown in Fig. 11B. The supplier can be thereby informed of a bid price to submit in order to obtain a target allocation ratio, which would encourage more positive bidding. This is particularly effective when the allocation ratio rule is not previously disclosed to the suppliers.

The reverse auction process of the steps S709 to S711 ends at a predetermined auction close time (S712). It is, however, possible to extend the auction close time if the reverse auction is heated up, as is conventionally done.

Finally, the server 1 transmits reverse auction result information that contains a determined contract price, successful suppliers, and an allocation ratio of procurement shares to the buyer terminal 2 (S713). The buyer terminal 2 then displays the received reverse auction result for the buyer (S714). The server 1 also transmits reverse auction result information such as a determined allocation ratio and supplier ranking to the supplier terminal 3. The supplier terminal 3 displays the received reverse auction result for the participating supplier.

If the server 1, the buyer terminal 2, the supplier terminal 3 operate according to the process flow described above, it is possible to implement the reverse auction in which the allocation ratio of procurement shares to suppliers varies according not only to the ranking of the suppliers but also to a difference in bid price among suppliers.

Though the above description has described the case where an item to be procured is a product, this invention is also applicable to the case where the item is service. In this case, the scale of service, such as the number of hours in temporary personnel service or the number of words in translation service, may be allocated instead of a procurement quantity.

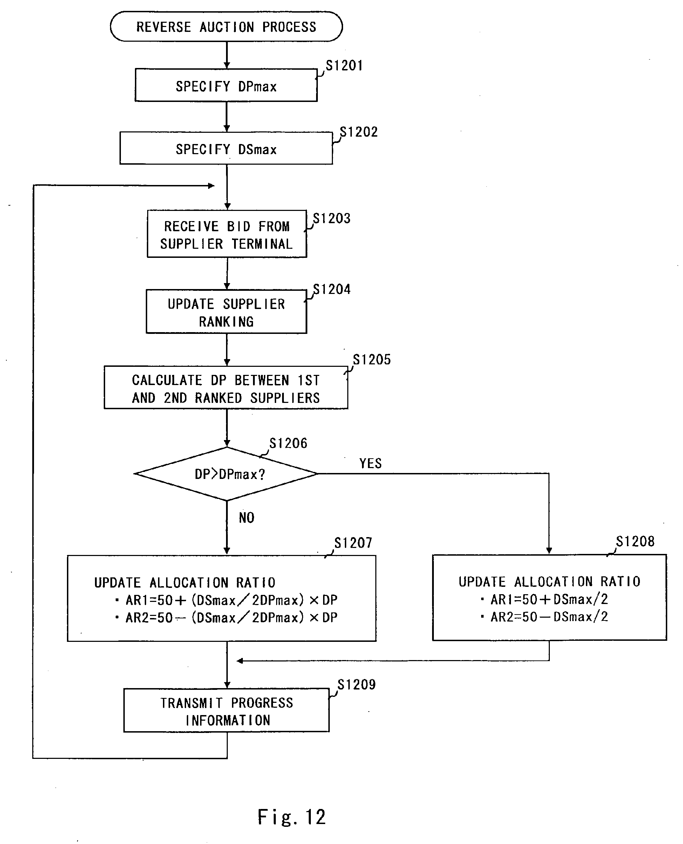

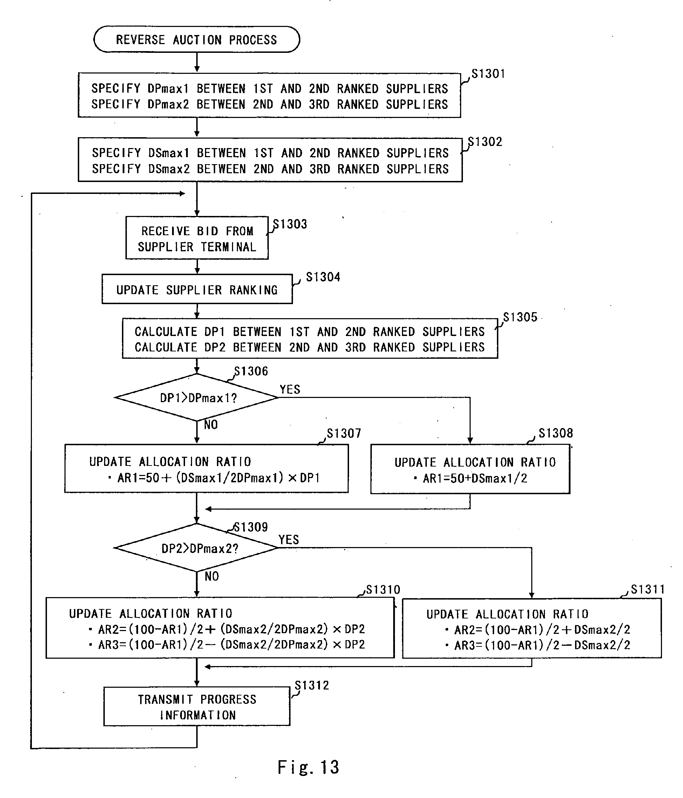

The contents of the procurement allocation table 175 described above is just an example. In the case of selecting three or more suppliers, an allocation rule among the suppliers may be defined. Further, the procurement allocation table 175 may not determine an allocation ratio but directly determine an allocation quantity. However, setting the allocation ratio allows creation of a generalized table that does not depend on a total allocation amount. Furthermore, it is feasible to calculate an allocation ratio or an allocation quantity not by using the procurement allocation table 175 as shown in Fig. 6 but by using a certain calculation formula. A case of calculating an allocation ratio using a calculation formula is described below with reference to Figs. 12 and 13.

Second Embodiment

Fig. 12 shows the process flow of reverse auction that calculates an allocation ratio by using a calculation formula, instead of using the procurement allocation table 175. It shows the case of selecting two suppliers. The process of Fig. 12 distributes a total procurement amount in proportion to a bid price difference unless a bid price difference between the first-ranked and the second-ranked suppliers exceeds a predetermined threshold value, and distributes the total procurement amount with a certain allocation ratio if the bid price difference exceeds the threshold value. This process is detailed hereinbelow.

First, the process specifies a maximum allocation ratio difference DSmax and a maximum price difference DPmax as parameters used for calculating an allocation ratio. The maximum allocation ratio difference DSmax specifies a maximum difference in allocation ratio between the suppliers whose bid prices are ranked in the first place and in the second place. For example, if the maximum allocation ratio difference DSmax is 50%, a maximum value of the allocation rate for the first-ranked supplier is 75% and the allocation rate for the second-ranked supplier at this time is 25%. A maximum of the maximum allocation ratio difference DSmax is 100% and selection of a single supplier is possible in this case. If it is desired to always select two suppliers, the maximum allocation ratio difference DSmax is set to less than 100%.

The maximum price difference DPmax indicates a threshold value in which the allocation ratio difference between the first-ranked and the second-ranked suppliers is the maximum allocation ratio difference DSmax. Thus, if a bid price difference between the first-ranked and the second-ranked suppliers is greater than the maximum price difference DPmax, a certain allocation ratio specified by the maximum allocation ratio difference DSmax is applied. Specifically, when the maximum price difference DPmax is 5 million yen and the maximum allocation ratio difference DSmax is 50%, if a bid price difference between the first-ranked and the second-ranked suppliers is greater than 5 million yen, the allocation rate for the first-ranked supplier is 75% and the allocation rate for the second-ranked supplier is 25%. On the other hand, if a bid price difference between the first-ranked and the second-ranked suppliers is less than the maximum price difference DPmax, an allocation ratio is determined in proportion to the bid price difference. If the allocation ratio of the first-ranked supplier is AR1 and the allocation ratio of the second-ranked supplier is AR2, they can be expressed by the following formulas:

$$AR1 = 50 + (DSmax/2DPmax) * DP \qquad (1)$$

$$AR2 = 50 - (DSmax/2DPmax) * DP \qquad (2)$$

where DP represents a difference value of a bid price between the first-ranked and the second-ranked suppliers. When DP=0, AR1 and AR2 are both 50(%). When DP=DPmax, AR1=50+DSmax/2 and AR2=50-DSmax/2; therefore, AR1-AR2=DSmax(%) and AR1+AR2=100(%).

The process flow shown in Fig. 12 first specifies a maximum price difference DPmax and a maximum allocation ratio difference DSmax (S1201, S1202). Since these values are prerequisites for reverse auction, they may be determined prior to the implementation of the reverse auction and notified to a buyer and supplier as the reverse auction starting terms in the steps S707 and S708 described above with reference to Fig. 7.

Then, the server device 1 receives bid data from the supplier terminal 3 (S1203). The server device 1 compares the received bid price with the bid prices submitted by other suppliers and updates the supplier ranking list (S1204).

This process is the same as the process of S801 and S802 described with reference to Fig. 8.

Then, it calculates a bid price difference DP between the first-ranked and the second-ranked suppliers (S1205). Then, the next step determines if the calculated bid price difference value DP is greater than the maximum price difference DPmax (S1206). If the bid price difference value DP is equal to or less than the maximum price difference DPmax, the allocation ratios of the first-ranked and the second-ranked suppliers are calculated by the formulas (1) and (2) (S1207). On the other hand, if the bid price difference value DP is greater than the maximum price difference DPmax, a certain allocation ratio where AR1-AR2=DSmax is applied (S1208).

Finally, the server 1 transmits progress information of the reverse auction to the buyer terminal 2 and the supplier terminal 3 (S1209). The display screen of the buyer terminal 2 and the supplier terminal 3 based on the progress information transmitted in this step is the same as in the step S805 described with reference to Fig. 8 and thus not described here.

Fig. 13 shows the process flow of the reverse auction that calculates an allocation ratio by using a calculation formula in the case of selecting three suppliers. As an example, it shows the case of determining the allocation ratios of the first-ranked and the second or lower ranked suppliers by the same calculation method as the case of selecting two suppliers described with reference to Fig. 12, and then determining the allocation ratios of the second-ranked and the third-ranked suppliers by the same method. Specifically, the process determines the allocation ratio of the first-ranked supplier in the steps S1306 to S1308, which are similar to the steps S1206 to S1208 shown in Fig. 12. Then, it distributes the amount left after eliminating the allocation ratio of the first-ranked supplier to the second-ranked and the third-ranked suppliers in the steps S1309 to S1311. The allocation ratios for the second-ranked and the third-ranked suppliers are determined in proportion to a difference in bid price if the bid price difference DP2 is equal to or smaller than the maximum price difference DPmax2. In this case, the allocation ratio AR2 of the second-ranked supplier and the allocation ratio AR3 of the third-ranked supplier can be expressed by the following formulas:

$$AR2=(100-AR1)/2+(DSmax2/2DPmax2)*DP2 \qquad (3)$$

$$AR3=(100-AR1)/2-(DSmax2/2DPmax2)*DP2 \qquad (4)$$

where AR1 represents an allocation ratio for the first-ranked supplier. On the other hand, if the bid price difference DP2 is greater than the maximum price difference DPmax2, the amount left after eliminating the allocation ratio of the first-ranked supplier is distributed according to a certain allocation ratio specified by the maximum price difference DPmax2 (S1311). The process steps other than the allocation ratio calculation process of S1306 to S1311 in the process flow of Fig. 13 are the same as the corresponding steps in the case of selecting two suppliers shown in Fig. 12, and thus not described here.

As described in the foregoing, the process that calculates an allocation ratio using the above calculation formulas also enables the reverse auction in which an allocation ratio of procurement shares varies according to a difference in bid price among suppliers.

Although the above embodiments describe the case where the reverse auction execution program 171 is stored in the external storage device 17 such as a hard disk, the program may be stored in a variety of storage media or transmitted through a communication medium. The storage media include a flexible disk, hard disk, magnetic disk, magnetic optical disk, CD-ROM, DVD, ROM cartridge, RAM memory cartridge with battery backup, flash memory cartridge, nonvolatile RAM cartridge, and so on, for example. The communication media include wired communication media such as a telephone line and wireless communication media such as a microwave line, including internet.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Claims**

1. A control method of reverse auction by a server connected to a plurality of supplier terminals through a communication network, comprising:

receiving bids from the plurality of supplier terminals through the communication network;

generating comparison information for relatively comparing evaluation parameters of the bids; and determining distribution of a total procurement amount of a reverse auction target item based on the comparison information.

2. The control method according to claim 1, wherein each evaluation parameter is a bid price, and the comparison information is a bid price difference or a bid price ratio.

3. The control method according to claim 1, wherein the step of determining the distribution of a total procurement amount determines the distribution of the total procurement amount based on an allocation rule that associates the comparison information and the distribution.

4. The control method according to claim 1, wherein the step of determining the distribution of a total procurement amount determines a distribution quantity or a distribution ratio of the total procurement amount.

5. The control method according to claim 1, wherein the step of generating the comparison information ranks the bids transmitted from the plurality of supplier terminals and generates the comparison information on a predetermined number of bids ranked from a top.

6. The control method according to claim 1, further comprising:

   transmitting reverse auction progress information containing the determined distribution to the plurality of supplier terminals.

7. A computer program product for causing a computer to execute control of reverse auction, the computer program product including a computer readable medium that stores a program code, the program code comprising:

   a first program code generating comparison information for relatively comparing evaluation parameters of bids which transmitted from a plurality of supplier terminals to the computer; and
   a second program code determining distribution of a total procurement amount of a reverse auction target item based on the comparison information.

8. The computer program product according to claim 7, wherein each evaluation parameter is a bid price, and the comparison information is a bid price difference or a bid price ratio.

9. The computer program product according to claim 7, wherein the second program code determines the distribution of the total procurement amount based on an allocation rule that associates the comparison information and the distribution.

10. The computer program product according to claim 7, wherein the second program code determines a distribution quantity or a distribution ratio of the total procurement amount.

11. The computer program product according to claim 7, wherein the first program code ranks the bids transmitted from the plurality of supplier terminals and generates the comparison information on a predetermined number of bids ranked from a top.

12. The computer program product according to claim 7, further comprising:

   a program code transmitting reverse auction progress information containing the determined distribution to the plurality of supplier terminals.

13. A server connectable to a plurality of supplier terminals through a communication network and implementing control of reverse auction, comprising:

   a unit of receiving bids from the plurality of supplier terminals through the communication network;
   a unit of generating comparison information for relatively comparing evaluation parameters of the bids; and
   a unit of determining distribution of a total procurement amount of a reverse auction target item based on the comparison information.

14. The server according to claim 13, wherein each evaluation parameter is a bid price, and the comparison information is a bid price difference or a bid price ratio.

15. The server according to claim 13, wherein the unit of determining the distribution determines the distribution of the total procurement amount based on an allocation rule that associates the comparison information and the distribution.

16. The server according to claim 13, wherein the unit of determining the distribution determines a distribution quantity or a distribution ratio of the total procurement amount.

17. The server according to claim 13, wherein the unit of generating the comparison information ranks the bids transmitted from the plurality of supplier terminals and generates the comparison information on a predetermined number of bids ranked from a top.

18. The server according to claim 13, further comprising:

a unit of transmitting reverse auction progress information containing the determined distribution to the plurality of supplier terminals.

① PROCUREMENT INFORMATION
② BID
③ REVERSE AUCTION PROGRESS INFORMATION
④ REVERSE AUCTION RESULT

SERVER 1

BUYER TERMINAL 2

SUPPLIER TERMINAL 3

SUPPLIER TERMINAL 3

SUPPLIER TERMINAL 3

SUPPLIER TERMINAL 3

4

Fig. 1

EP 1 630 736 A1

Fig. 2

11 INPUT DEVICE
12 OUTPUT DEVICE
13 INPUT/OUTPUT INTERFACE
14 COMMUNICATION INTERFACE
15 CPU
16 INTERNAL MEMORY
17 EXTERNAL STORAGE DEVICE
171 REVERSE AUCTION EXECUTION PROGRAM
172 BUYER INFORMATION TABLE
173 SUPPLIER INFORMATION TABLE
174 PROCUREMENT CASE TABLE
175 PROCUREMENT ALLOCATION TABLE

| BUYER ID | BUYER NAME | CONTACT INFORMATION | E-mail |
|---|---|---|---|
| BUYER01 | ○○ MANUFACTURER | HAJIME TARO 1-1, XXcho-me, ○○-ku, TOKYO | tanaka@ao1seizou.co.jp |
| BUYER02 | △△ FIRM | JIRO SUZUKI 2-2, □□cho, △△-shi | suzuki@aka2jimusyo.co.jp |
| ... | ... | ... | ... |

Fig. 3

| SUPPLIER ID | SUPPLIER NAME | CONTACT INFORMATION | E-mail |
|---|---|---|---|
| SUPPLIER01 | AAA | SANTA SATO 3-3, XXcho, ○○-ku, TOKYO | sato@maru1hanbai.co.jp |
| SUPPLIER02 | BBB | SHIKAKU WATANABE 4-4, □□cho, △△-shi | watanabe@kaku2syouji.co.jp |
| ... | ... | ... | ... |

Fig. 4

| CASE ID | BUYER ID | PRODUCT NAME | STARTING UNIT PRICE (YEN) | STARTING PRICE (YEN) | NUMBER OF SUPPLIERS TO-BE SELECTED | PARTICIPATING SUPPLYER ID |
|---|---|---|---|---|---|---|
| 040001 | BUYER01 | XYZ | 10000 | 100000000 | 2 | SUPPLIER01<br>SUPPLIER02<br>SUPPLIER03<br>SUPPLIER04<br>SUPPLIER05<br>SUPPLIER06 |
| . . . | . . . | . . . | . . . | . . . | . . . | . . . |

Fig. 5

EP 1 630 736 A1

| BID PRICE RATIO | ALLOCATION RATIO FOR 1ST RANK | ALLOCATION RATIO FOR 2ND RANK |
|---|---|---|
| 0% | 50% | 50% |
| <1% | 60% | 40% |
| <2% | 70% | 30% |
| <3% | 80% | 20% |
| <4% | 90% | 10% |
| ≧5% | 100% | 0% |

Fig. 6

# EP 1 630 736 A1

| BUYER TERMINAL 2 | SUPPLIER TERMINAL 3 | SERVER 1 |
|---|---|---|

**S701**
INPUT PROCUREMENT INFORMATION

**S702**
RECEIVE PROCUREMENT INFORMATION

**S704**
DISPLAY PARTICIPATION OFFER

**S703**
SEND PARTICIPATION OFFER TO SUPPLIERS

**S705**
INPUT PARTICIPATION RESPONSE

**S706**
RECEIVE PARTICIPATION RESPONSE

**S708**
DISPLAY REVERSE AUCTION STARTING TERMS

**S708**
DISPLAY REVERSE AUCTION STARTING TERMS

**S707**
DETERMINE REVERSE AUCTION STARTING TERMS

**S710**
SUBMIT BID

**S709**
HOLD REVERSE AUCTION

**S711**
DISPLAY PROGRESS OF REVERSE AUCTION

**S711**
DISPLAY PROGRESS OF REVERSE AUCTION

**S712**
CLOSE REVERSE AUCTION

**S714**
DISPLAY REVERSE AUCTION STARTING TERMS

**S714**
DISPLAY REVERSE AUCTION STARTING TERMS

**S713**
TRANSMIT REVERSE AUCTION RESULT

Fig. 7

17

REVERSE AUCTION
PROCESS

RECEIVE BID FROM
SUPPLIER TERMINAL — S801

UPDATE SUPPLIER
RANKING — S802

CALCULATE INPUT
PRICE RATIO — S803

UPDATE ALLOCATION
QUANTITY — S804

TRANSMIT PROGRESS
INFORMATION — S805

Fig. 8

| RANK | SUPPLIER ID | BID PRICE(YEN) | ALLOCATION RATIO(%) |
|------|-------------|----------------|---------------------|
| 1 | SUPPLIER01 | 79,000,000 | 80 |
| 2 | SUPPLIER02 | 81,000,000 | 20 |
| 3 | SUPPLIER03 | 83,000,000 | 0 |
| 4 | SUPPLIER06 | 85,000,000 | 0 |
| 5 | SUPPLIER04 | 99,300,000 | 0 |
| 6 | SUPPLIER05 | 99,600,000 | 0 |

Fig. 9A

| RANK | SUPPLIER ID | BID PRICE(YEN) | ALLOCATION RATIO(%) |
|------|-------------|----------------|---------------------|
| 1 | SUPPLIER01 | 79,000,000 | 70 |
| 2 | SUPPLIER02 | 80,000,000 | 30 |
| 3 | SUPPLIER03 | 83,000,000 | 0 |
| 4 | SUPPLIER06 | 85,000,000 | 0 |
| 5 | SUPPLIER04 | 99,300,000 | 0 |
| 6 | SUPPLIER05 | 99,600,000 | 0 |

Fig. 9B

**Fig.10**

BUYER NAME ┃○○ MANUFACTURER┃ PROCUREMENT QUANTITY [ 10,000 ] REMAINING TIME [ 00 : 13 : 20 ]

CASE ID [ 04001 ] STARTING PRICE [ 100,000,000 ] YEN

---

NUMBER OF SUPPLIERS TO BE SELECTED [ 2 ] ESTIMATED TOTAL ORDER VALUE [ 80,450,000 ] YEN AVERAGE UNIT PRICE [ 8,045 ] YEN REDUCTION RATE [ 19.5 ] %

| RANK | BIDDER | BID PRICE | UNIT PRICE | ALLOCATION RATIO | ALLOCATION QUANTITY | ESTIMATED ORDER VALUE |
|---|---|---|---|---|---|---|
| 1 | AAA | ¥79,000,000 | ¥7,900 | 80% | 8,000 | ¥63,200,000 |
| 2 | BBB | ¥81,000,000 | ¥8,100 | 20% | 2,000 | ¥16,200,000 |
| 3 | CCC | ¥83,000,000 | ¥8,300 | 0% | 0 | ¥0 |
| 4 | DDD | ¥85,000,000 | ¥8,500 | 0% | 0 | ¥0 |
| 5 | EEE | ¥99,300,000 | ¥9,930 | 0% | 0 | ¥0 |
| 6 | FFF | ¥99,500,000 | ¥9,950 | 0% | 0 | ¥0 |

---

ALLOCATION RATIO

AAA ///////// BBB

0　10　20　30　40　50　60　70　80　90　100　(%)

EP 1 630 736 A1

| | | |
|---|---|---|
| BUYER NAME | ○○ MANUFACTURER | PROCUREMENT QUANTITY 10,000    REMAINING TIME 00 : 13 : 20 |
| CASE ID | 04001 | STARTING PRICE 100,000,000 YEN |

1ST RANKED BID PRICE  79,000,000  YEN

YOUR BID PRICE  81,000,000  YEN   ALLOCATION RATIO  20  %   ALLOCATION QUANTITY  2000

YOUR RANK  2ND  PLACE   ESTIMATED RECEIVED ORDER VALUE  16,200,000  YEN

BIDDING

SUBMIT THIS BIT PRICE

BID PRICE  80,000,000  YEN   SUBMIT

Fig. 11A

| | | |
|---|---|---|
| BUYER NAME | ○○ MANUFACTURER | PROCUREMENT QUANTITY 10,000    REMAINING TIME 00 : 13 : 20 |
| CASE ID | 04001 | STARTING PRICE 100,000,000 YEN |

1ST RANKED BID PRICE  79,000,000  YEN

YOUR BID PRICE  81,000,000  YEN   ALLOCATION RATIO  20  %   ALLOCATION QUANTITY  2000

YOUR RANK  2ND  PLACE   ESTIMATED RECEIVED ORDER VALUE  16,200,000  YEN

SIMULATION

INPUT SIMULATION PRICE AND PRESS ENTER

80,000,000  円   ENTER

EXPECTED RANK  2ND  PLACE   EXPECTED ALLOCATION RATIO  30  %   EXPECTED ALLOCATION QUANTITY  3000

ALLOCATION RATIO  30%   OTHERS  70%

BIDDING

SUBMIT THIS BIT PRICE

BID PRICE  80,000,000  YEN   SUBMIT

Fig. 11B

EP 1 630 736 A1

REVERSE AUCTION PROCESS

SPECIFY DPmax — S1201

SPECIFY DSmax — S1202

RECEIVE BID FROM SUPPLIER TERMINAL — S1203

UPDATE SUPPLIER RANKING — S1204

CALCULATE DP BETWEEN 1ST AND 2ND RANKED SUPPLIERS — S1205

DP>DPmax? — S1206

YES

NO

UPDATE ALLOCATION RATIO — S1207
- $AR1 = 50 + (DSmax / 2DPmax) \times DP$
- $AR2 = 50 - (DSmax / 2DPmax) \times DP$

UPDATE ALLOCATION RATIO — S1208
- $AR1 = 50 + DSmax/2$
- $AR2 = 50 - DSmax/2$

TRANSMIT PROGRESS INFORMATION — S1209

Fig. 12

22

REVERSE AUCTION PROCESS

SPECIFY DPmax1 BETWEEN 1ST AND 2ND RANKED SUPPLIERS
SPECIFY DPmax2 BETWEEN 2ND AND 3RD RANKED SUPPLIERS ⌐S1301

SPECIFY DSmax1 BETWEEN 1ST AND 2ND RANKED SUPPLIERS
SPECIFY DSmax2 BETWEEN 2ND AND 3RD RANKED SUPPLIERS ⌐S1302

RECEIVE BID FROM
SUPPLIER TERMINAL S1303

UPDATE SUPPLIER RANKING S1304

CALCULATE DP1 BETWEEN 1ST AND 2ND RANKED SUPPLIERS
CALCULATE DP2 BETWEEN 2ND AND 3RD RANKED SUPPLIERS S1305

S1306
$DP1 > DPmax1?$ —YES→

NO

UPDATE ALLOCATION RATIO S1307
• $AR1 = 50 + (DSmax1/2DPmax1) \times DP1$

UPDATE ALLOCATION RATIO S1308
• $AR1 = 50 + DSmax1/2$

S1309
$DP2 > DPmax2?$ —YES→

NO

UPDATE ALLOCATION RATIO S1310
• $AR2 = (100 - AR1)/2 + (DSmax2/2DPmax2) \times DP2$
• $AR3 = (100 - AR1)/2 - (DSmax2/2DPmax2) \times DP2$

UPDATE ALLOCATION RATIO S1311
• $AR2 = (100 - AR1)/2 + DSmax2/2$
• $AR3 = (100 - AR1)/2 - DSmax2/2$

TRANSMIT PROGRESS
INFORMATION S1312

Fig. 13

**European Patent Office**

**DECLARATION**

which under Rule 45 of the European Patent Convention shall be considered, for the purposes of subsequent proceedings, as the European search report

Application Number

EP 05 01 8210

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 15 December 2005 | Beatty, J |

EPO FORM 1504 (P04C37)